# EUROPÄISCHE PATENTSCHRIFT

(11) **EP 0 710 189 B1**
(45) Veröffentlichungstag und Bekanntmachung des Hinweises auf die Patenterteilung: **12.02.1997**
(21) Anmeldenummer: 94922225.1
(22) Anmeldetag: 27.07.1994
(51) Int. Cl.: B60B 39/00

(54) **VORRICHTUNG ZUM ÖFFNEN EINER DRUCKGASPATRONE**
DEVICE FOR OPENING COMPRESSED GAS CARTRIDGES
DISPOSITIF PERMETTANT D'OUVRIR UN CYLINDRE A GAZ COMPRIME

(30) Priorität: 30.07.1993 DE 4326084
(43) Veröffentlichungstag der Anmeldung: 08.05.1996
(73) Patentinhaber: RUD-KETTENFABRIK RIEGER & DIETZ GMBH U. CO., D-73432 Aalen-Unterkochen (DE)
(72) Erfinder: WOLF, Anton, D-73488 Ellenberg (DE)
(74) Vertreter: Böning, Manfred, Dr.-Ing.
(86) Internationale Anmeldenummer: DE9400907
(87) Internationale Veröffentlichungsnummer: WO9503944

(56) Entgegenhaltungen:
- EP-A- 0 162 823
- EP-A- 0 569 112
- DE-C- 267 326
- DE-U- 9 206 280

## Beschreibung

Die Erfindung betrifft eine Vorrichtung zum Öffnen des Verschlusses einer Druckgaspatrone mit Hilfe eines Stößels, der durch einen von Hand betätigbaren Hebel und mindestens eine mit diesem verbundene Lasche aus einer Ausgangsposition in eine Öffnungsposition überführbar ist.

Aus der DE-PS 267 326 ist eine Vorrichtung der vorstehenden Art bekannt, bei der die Druckgaspatrone am Oberteil des Deckels eines Gehäuses für einen Siphon gelagert ist und bei der das Obeteil mit Führungen für einen sogenannten Gleitblock versehen ist, der unter anderem den Dorn zum Öffnen des Verschlusses der Druckgaspatrone trägt. In den Gleitblock kann durch mit dem kurzen Arm eines von Hand betätigbaren, am Oberteil des Deckels gelagerten Winkelhebels verbundene Laschen eine Bewegung eingeleitet werden, um den Dorn aus seiner Ausgangsposition in eine Öffnungsposition zu überführen. Die bekannte Konstruktion ist nicht zuletzt wegen der Führungen für den Gleitblock vergleichsweise aufwendig und vermag darüber hinaus auch insofern nicht voll zu befriedigen, als zur Einleitung der Öffnungsbewegung in den Gleitblock eine verhältnismäßig große Schwenkbewegung des Winkelhebels erforderlich ist.

Der Erfindung liegt die Aufgabe zugrunde, eine Vorrichtung der in Betracht gezogenen Art besonders einfach auszugestalten. Diese Aufgabe wird erfindugnsgemäß dadurch gelöst, daß der Hebel einen mit der Druckgasleitung verbundenen, um eine erste Achse schwenkbar an einer Konsole gelagerten ersten Teil sowie einen mit der Druckgaspatrone verbindbaren, gegenüber dem ersten Teil axial verschiebbaren zweiten Teil aufweist und daß zur Einleitung der zum Öffnen der Druckgaspatrone nutzbaren Relativbewegung zwischen den beiden Teilen die Lasche dient, deren eines Ende am zweiten Teil angelenkt ist, während ihr anderes Ende um eine gegenüber der ersten Achse versetzt an der Konsole angeordnete zweite Achse ebenfalls schwenkbar an der Konsole gelagert ist.

Die erfindungsgemäße Vorrichtung eignet sich in besonderem Maße für den Einsatz in Verbindung mit Gleitschutzvorrichtungen, deren Antriebsaggregat für den regelmäßig als schwenkbarer Auslegerarm ausgebildeten Träger mit Druckluft aus einem im Fahrzeug zu Bremszwecken vorhandenen Druckluftsystem beaufschlagbar ist (EP 0 162 823 B1). Es versteht sich, daß diese Möglichkeit zum Betätigen des Antriebsaggregates bei Fahrzeugen ohne Druckluftbremssysteme, also insbesondere bei Kleinlastern oder Kleinbussen entfällt. Um auch hier vom Fahrersitz eine ähnlich bequeme Bedienbarkeit der Gleitschutzvorrichtung wie bei schweren Lastkraftwagen und Omnibussen zu schaffen, ist bereits erwogen worden, die entsprechenden kleineren Fahrzeuge mit einem gesonderten Drucklufterzeugungssystem zum Inbetriebnehmen der Gleitschutzvorrichtung auszustatten. Die Realisierung dieses Gedankens und seine breite Anwendung ist in der Praxis indes aus Kosten-, Platz- und Sicherheitsgründen stets gescheitert.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform. Es zeigen:
Fig. 1 die Draufsicht auf zwei Gleitschutzvorrichtungen und die zu deren Betätigung erforderlichen Mittel,
Fig. 2 die Seitenansicht der Vorrichtung zum Öffnen der Druckgaspatronen zum Betätigen der Gleitschutzvorrichtungen gemäß Figur 1,
Fig. 3 die Vorderansicht der Vorrichtung gemäß Figur 3,
Fig. 4 einen Schnitt längs der Linie IV-IV in Figur 2,
Fig. 5 eine modifizierte Halterung für eine Druckgaspatrone,
Fig. 6 teilweise im Schnitt Einzelheiten der Vorrichtung zum Öffnen einer Druckgaspatrone in der Ausgangsstellung und
Fig. 7 teilweise im Schnitt Einzelheiten der in Figur 6 gezeigten Vorrichtung nach dem Öffnen der Druckgaspatrone.

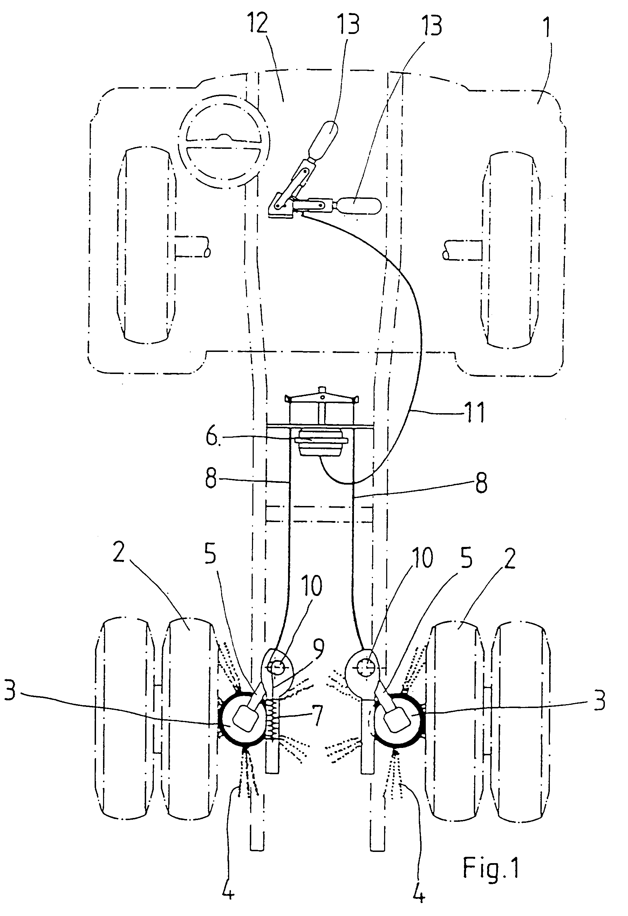

In Figur 1 ist 1 das Führerhaus eines Kleinlasters, der nicht über ein eigenes Drucklufterzeugungssystem mit seinen üblichen Bauteilen, wie Kompressor, Druckluftspeicher u.dgl., verfügt. Den hinteren Reifen 2 des Fahrzeuges sind zwei Gleitschutzvorrichtungen zugeordnet, die in bekannter Weise aus einem als Reibrad ausgebildeten Halter 3 für eine Vielzahl von Kettensträngen 4, einem schwenkbaren Träger 5 für den Halter 3, einem Antriebsaggregat 6 zum Überführen der Halter 3 aus der Ruhestellung in die in Figur 1 darsgestellte Betriebsstellung und aus Rückstellfedern 7 zum Zurückführen der Halter 3 aus ihrer Betriebsstellung in eine Ruhestellung bestehen, wobei das vorzugsweise aus einem Arbeitszylinder und einer Rollmembran bestehende Antriebsaggregat 6 über Bowdenzüge 8 und die Rückstellfedern 7 über einen Zugstrang 9 mit den Schwenkachsen 10 der Träger 5 in Verbindung stehen, um in diese gegenläufige Bewegungen einleiten zu können.

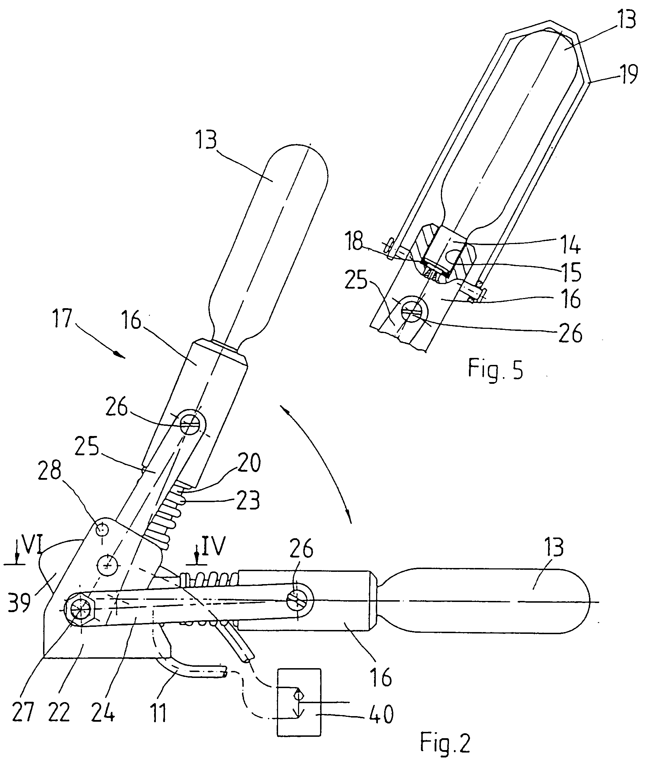

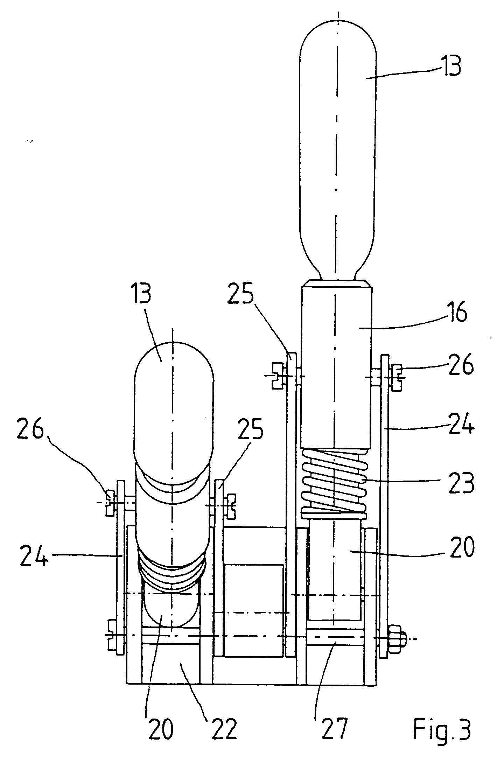

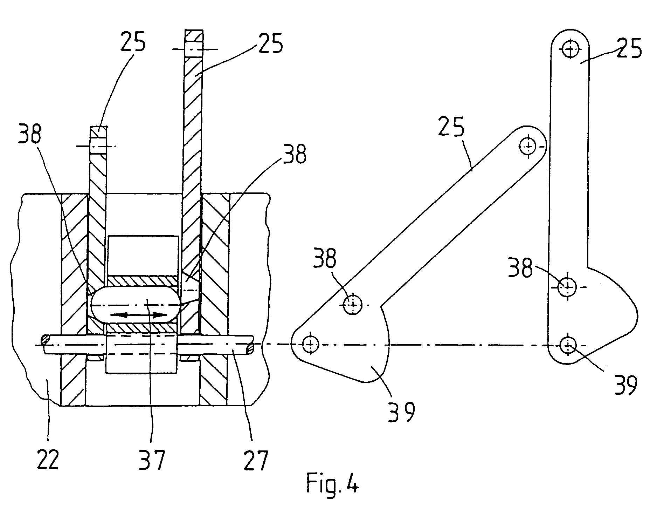

Das Antriebsaggregat 6 ist über eine Druckgasleitung 11 mit einer im Führerhaus 1 angeordneten Druckgasquelle 12 verbunden, die - wie in den Figuren 2 bis 7 dargestellt - mit einem von zwei austauschbaren Druckgaspatronen 13 gebildeten autonomen Druckgasspeicher ausgestattet ist.

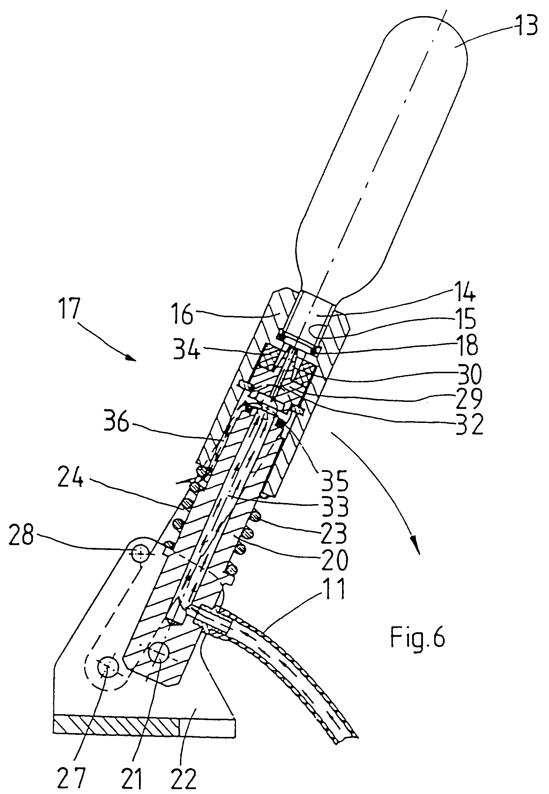

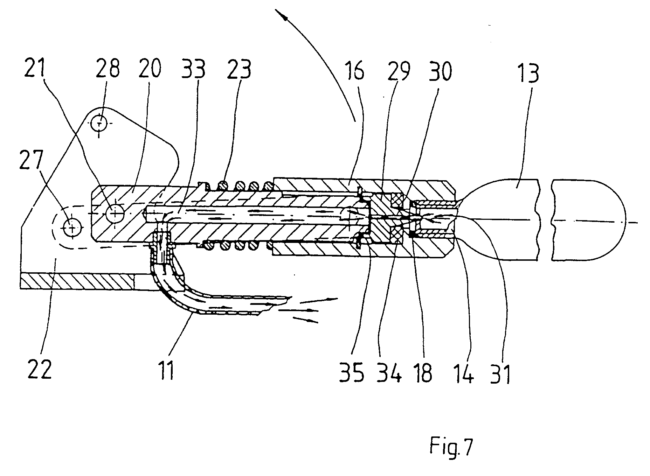

Die Mundstücke 14 der Druckgaspatronen 13 ragen in jeweils eine Bohrung 15 eines Teils 16 eines Hebels 17. Sie liegen dabei mit ihrer Stirnseite gegen eine im Grund der Bohrung angeordnete Dichtung 18 an. Gehalten werden die Mundstücke 14 entweder durch eine Schraubverbindung oder - wie in Figur 5 angedeutet - durch einen Haltebügel 19. Der Teil 16 bildet eine Hülse, die mit ihrem der Druckgaspatrone 13 abgewandten Ende einen Teil 20 übergreift, der um eine Achse 21 schwenkbar an einer Konsole 22 gelagert ist. Zwischen den beiden Teilen 16 und 20 ist eine Feder 23 angeordnet, die den Teil 16 zum der Achse 21 abgewandten Ende des Teils 20 zu drücken sucht. Der Zusammenhalt der Teile 16 und 20 wird durch paarweise angeordnete Laschen 24,25 gesichert, die einerseits bei 26 gelenkig mit dem Teil 16 verbunden sind und andererseits schwenkbar auf einer Achse 27 der Konsole 22 gelagert sind. Die Achsen 21 und 27 sind derart versetzt zueinander an der Konsole 22 angeordnet, daß die Hebel 17 durch die Feder 23 in einer der beiden in den Figuren 6 und 7 dargestellten Positionen gehalten werden, wobei die in Figur 6 dargestellte Endposition durch einen Anschlag 28 bestimmt wird.

Im Innern des Teiles 16 ist um begrenzte Beträge hin- und herverschiebbar ein Perkussionsstößel 29 gelagert, dessen Spitze 30 beim Überführen des Hebels 17 aus der in Figur 6 dargestellten Position gemäß Figur 7 den Verschluß 31 der Druckgaspatrone 13 durchstößt. Während des Öffnungsvorganges wird der Teil 16 durch die Laschen 24,25 um einen von der Relativlage der Achsen 21 und 27 bestimmten Betrag über den Teil 20 gezogen, der hierbei die Funktion eines auf den Perkussionsstößel 29 einwirkenden Druckstempels übernimmt. Sobald die Druckgaspatrone 13 geöffnet ist, kann Druckgas über die Bohrungen 32,33 des Perkussionsstößels 29 und des Teils 20 in die Druckgasleitung fließen, wobei Dichtungen 34,35 das Entstehen von Leckverlusten verhindern. Das Druckgas drückt die Kalter 3 der Gleitschutzvorrichtung in die in Figur 1 dargestellte Betriebsstellung. Ist ein Gleitschutz nicht mehr erforderlich, so wird der jeweilige Hebel 17 aus der in Figur 7 dargestellten Position in die Position gemäß Figur 6 zurückgeschwenkt und das Antriebsaggregat 6 wird über die Druckgasleitung 11 und eine Nut 30 am Umfang des Teils 20 entlüftet, wie dies in Figur 6 angedeutet ist.

Um eine gleichzeitige Betätigung der beiden nebeneinander angeordneten Hebel 17 zu verhindern, ist zwischen den Laschen 25 hin- und herverschiebbar ein bolzenförmiges Verriegelungselement 37 gelagert, dessen Enden Rastmulden 38 in den mit Sperrlappen 39 versehenen Laschen 25 zugeordnet sind.

Der Abstand zwischen den Laschen 25 und die Länge des Verriegelungselementes 37 sind dabei so aufeinander abgestimmt, daß das Verriegelungselement 37 jeweils nur eine der beiden Rastmulden 38 freigeben kann, die Hebel 17 sind folglich nur getrennt voneinander betätigbar.

Ein Wechselventil 40 verhindert ein Überströmen von Druckgas in den jeweils nicht betätigten Hebel 17.

Wie die Figuren 2 bis 7 zeigen, erfüllen die Druckgaspatronen 13 bei der beschriebenen Konstruktion eine zusätzliche Aufgabe, die darin besteht, daß sie nicht nur einen Druckgasspeicher, sondern darüber hinaus einen Handgriff für die Hebel 17 bilden.

## Patentansprüche

1. Vorrichtung zum Öffnen des Verschlusses einer Druckgaspatrone (13) mit Hilfe eines Stößels (29), der durch einen von Hand betätigbaren Hebel (17) und mindestens eine mit diesem verbundene Lasche (24,25) aus einer Ausgangsposition in eine Öffnungsposition überführbar ist, **dadurch gekennzeichnet**, daß der Hebel (17) einen mit der Druckgasleitung (11) verbundenen, um eine erste Achse (21) schwenkbar an einer Konsole (22) gelagerten ersten Teil (20) sowie einen mit der Druckgaspatrone (13) verbindbaren, gegenüber dem ersten Teil (20) axial verschiebbaren zweiten Teil (16) aufweist und daß zur Einleitung der zum Öffnen der Druckgaspatrone (13) nutzbaren Relativbewegung zwischen den beiden Teilen (16,20) die Lasche (24,25) dient, deren eines Ende am zweiten Teil (16) angelenkt ist, während ihr anderes Ende um eine gegenüber der ersten Achse (21) versetzt an der Konsole (22) angeordnete zweite Achse (27) ebenfalls schwenkbar an der Konsole (22) gelagert ist.

2. Vorrichtung nach Anspruch 1, **dadurch gekennzeichnet**, daß der zweite Teil (16) des Hebels (17) über zwei an seinen sich gegenüberliegenden Seiten gelenkig mit ihm verbundenen Laschen (24,25) mit der Konsole (22) in Verbindung steht.

3. Vorrichtung nach Anspruch 1 oder 2, **dadurch gekennzeichnet**, daß zwischen dem ersten Teil (20) und dem zweiten Teil (16) ein bei der Relativbewegung zwischen diesen Teilen (16,20) um einen begrenzten Betrag hin- und herbewegbarer Perkussionsstößel (29) zum Durchbohren des Verschlusses (31) der Druckgaspatrone (13) angeordnet ist.

4. Vorrichtung nach einem oder mehreren der Ansprüche 1 bis 3, **dadurch gekennzeichnet**, daß der zweite Teil (16) als den ersten Teil (20) partiell übergreifende und durch diesen geführte Hülse ausgebildet ist.

5. Vorrichtung nach einem oder mehreren der Ansprüche 1 bis 4, **dadurch gekennzeichnet**, daß zwischen dem ersten Teil (20) und dem zweiten Teil (16) eine Feder (23) angeordnet ist.

6. Vorrichtung nach einem oder mehreren der Ansprüche 3 bis 5, **dadurch gekennzeichnet**, daß der Perkussionsstößel (29) in der Betriebsstellung des Hebels (17) durch Dichtungen (34,35) gegen Leckverluste abgedichtet ist.

7. Vorrichtung nach einem oder mehreren der Ansprüche 3 bis 6, **dadurch gekennzeichnet**, daß der erste Teil (20) des Hebels (17) und der Perkussionsstößel (29) mit fluchtenden Bohrungen (32,33) für das Druckgas versehen sind.

8. Vorrichtung nach einem oder mehreren der Ansprüche 1 bis 7, **dadurch gekennzeichnet**, daß die mit dem zweiten Teil (16) des Hebels (17) verbundene Druckgaspatrone (13) einen Handgriff für den Hebel (17) bildet.

9. Vorrichtung nach einem oder mehreren der Ansprüche 1 bis 8, **dadurch gekennzeichnet**, daß sie eine Vorrichtung mit zwei Hebeln (17) zum Öffnen zweier Druckgaspatronen (13) aufweist.

10. Vorrichtung nach Anspruch 9, **dadurch gekennzeichnet**, daß die beiden Hebel (17) durch ein Verriegelungs- element (37) gegen eine gleichzeitige Betätigung gesichert sind.

11. Vorrichtung nach Anspruch 10, **dadurch gekennzeichnet**, daß das Verriegelungselement (37) als hin- und herverschiebbar zwischen einander zugewandten Laschen (25) des einen und des anderen Hebels (17) gelagerter Bolzen ausgebildet ist, dessen Enden Rastmulden (38) in den Laschen (25) zugeordnet sind.

12. Vorrichtung nach Anspruch 11, **dadurch gekennzeichnet**, daß das Verriegelungselement (37) durch eine Schwenkbewegung eines Hebels (17) mit seinem einen Ende aus der Rastmulde (38) der diesem Hebel (17) zugeordneten Lasche (25) heraus- und mit seinem anderen Ende in die Rastmulde (38) der dem anderen Hebel (17) zugeordneten Lasche (25) hineindrückbar ist.

13. Vorrichtung nach einem oder mehreren der Ansprüche 1 bis 12, **dadurch gekennzeichnet**, daß sie im Führerhaus (1) eines Fahrzeuges angeordnet ist und dazu dient, über eine Druckgasleitung (11) mit dem Druckgas mindestens einer Druckgaspatrone (13) ein Antriebsaggregat (6) für einen am Fahrzeug gelagerten Träger (5) eines Halters (3) einer Gleitschutzvorrichtung zu beaufschlagen, um diese aus einer Ruhestellung in eine Betriebsstellung zu überführen, wobei an dem in eine Drehbewegung versetzbaren Halter (3) Kettenstränge (4) befestigt sind, deren dem Halter (3) abgewandte Enden bei in der Betriebsstellung umlaufendem Halter (3) unter Fliehkrafteinwirkung vom Halter (3) weg in den Bereich der Bodenberührungsfläche eines sich drehenden Fahrzeugreifens (2) geschleudert werden.

## Claims

1. A device for opening the seal of a compressed gas cartridge (13) with the aid of a ram (29) which can be moved from a starting position into an opening position by a lever (17) that can be actuated by hand and by means of at least one link (24, 25) connected to the said lever, wherein the lever (17) has a first part (20), which is connected to the compressed gas line (11) and is mounted on a bracket (22) in such a way as to be pivotable about a first pivot (21), and a second part (16), which can be connected to the compressed gas cartridge (13) and is axially displaceable relative to the first part (20), and wherein, to initiate the relative movement of the two parts (16, 20), which movement can be used to open the compressed gas cartridge (13), use is made of the link (24, 25), one end of which is coupled to the second part (16) while its other end is mounted on the bracket (22) in such a way as likewise to be pivotable about a second pivot (27) arranged on the bracket (22) in a position offset relative to the first pivot (21).

2. The device as claimed in claim 1, wherein the second part (16) of the lever (17) is connected to the bracket (22) by way of two links (24, 25) connected to it in a hinged manner on its opposite sides.

3. The device as claimed in claim 1 or 2, wherein the first part (20) and the second part (16) have arranged between them a percussion ram (29) for piercing the seal (31) of the compressed gas cartridge (13), the said percussion ram being movable backwards and forwards to a limited extent during the relative movement between these parts (16, 20).

4. The device as claimed in one or more of claims 1 to 3, wherein the second part (16) is designed as a sleeve which fits partially over the first part (20) and is guided by the latter.

5. The device as claimed in one or more of claims 1 to 4, wherein a spring (23) is arranged between the first part (20) and the second part (16).

6. The device as claimed in one or more of claims 3 to 5, wherein the percussion ram (29) is sealed off against leakage losses in the operating position of the lever (17) by seals (34, 35).

7. The device as claimed in one or more of claims 3 to 6, wherein the first part (20) of the lever (17) and the percussion ram (29) are provided with aligned holes (32, 33) for the compressed gas.

8. The device as claimed in one or more of claims 1 to 7, wherein the compressed gas cartridge (13) connected to the second part (16) of the lever (17) forms a handle for the lever (17).

9. The device as claimed in one or more of claims 1 to 8, wherein it has a device with two levers (17) for opening two compressed gas cartridges (13).

10. The device as claimed in claim 9, wherein the two levers (17) are secured against simultaneous actuation by a locking element (37).

11. The device as claimed in claim 10, wherein the locking element (37) is designed as a bolt which is mounted in such a way as to be displaceable backwards and forwards between mutually facing links (25) of one lever (17) and the other lever (17) and the ends of which are assigned to latching recesses (38) in the links (25).

12. The device as claimed in claim 11, wherein, by means of a pivoting movement of one lever (17), one end of the locking element (37) can be pushed out of the latching recess (38) of the link (25) assigned to this lever (17), and the other end pushed into the latching recess (38) of the link (25) assigned to the other lever (17).

13. The device as claimed in one or more of claims 1 to 12, wherein it is arranged in the driver's cab (1) of a vehicle and serves to supply a driving unit (6) for a vehicle-mounted carrier (5) of a holder (3) of an anti-skid device with the compressed gas of at least one compressed gas cartridge (13) via a compressed gas line (11) in order to move the said anti-skid device from a position of rest into an operating position, chain sections (4) being attached to the holder (3), to which a rotary movement can be imparted, those ends of the chain sections (4) which are remote from the holder (3) being flung away from the holder (3) under the action of centrifugal force into the region of the ground contact area of a rotating vehicle tire (2) when the holder (3) is revolving in the operating position.

## Revendications

1. Dispositif d'ouverture de l'obturateur d'une cartouche de gaz sous pression (13) à l'aide d'un poinçon (29) pouvant être déplacé, au moyen d'un levier (17) à commande manuelle et d'au moins une éclisse (24, 25) reliée à celui-ci, d'une position de départ en une position d'ouverture,
caractérisé en ce que le levier (17) comporte une première partie (20) reliée à la conduite (11) de gaz sous pression et montée sur une console (22) de façon oscillante autour d'un premier axe (21), ainsi qu'une seconde partie (16) pouvant être reliée à la cartouche (13) de gaz sous pression et pouvant être axialement déplacée par rapport à la première partie (20), et en ce que, pour produire le mouvement relatif entre les deux parties (16, 20), ce mouvement pouvant alors être mis à profit pour ouvrir la cartouche de gaz sous pression, on utilise l'éclisse (24, 25), dont une extrémité est articulée sur la seconde partie (16), alors que son autre extrémité est également montée sur la console (22), de façon pivotante autour d'un second axe (27) qui est disposé sur la console (22) de façon décalée par rapport au premier axe (21).

2. Dispositif selon la revendication 1, caractérisé en ce que la seconde partie (16) du levier (17) est en liaison avec la console (22) par l'intermédiaire de deux éclisses (24, 25) reliées de façon articulée aux deux côtés opposés du levier.

3. Dispositif selon la revendication 1 ou 2, caractérisé en ce qu'un poinçon percuteur (29) destiné à percer l'obturateur (31) de la cartouche de gaz sous pression (13) est disposé entre la première partie (16) et la seconde partie (20), pouvant être déplacé en va-et-vient sur une distance limitée sous l'action du mouvement relatif entre ces deux parties (16, 20).

4. Dispositif selon l'une ou plusieurs des revendications 1 à 3, caractérisé en ce que la seconde partie (16) est réalisée sous forme d'une douille recouvrant partiellement la seconde partie (20) et guidée par celle-ci.

5. Dispositif selon l'une ou plusieurs des revendications 1 à 4, caractérisé en ce qu'un ressort (23) est disposé entre la première partie (20) et la seconde partie (16).

6. Dispositif selon l'une ou plusieurs des revendications 3 à 5, caractérisé en ce qu'en position de fonctionnement du levier (17), le poinçon percuteur (29) est rendu étanche à toute perte par fuites grâce à des joints d'étanchéité (34, 35).

7. Dispositif selon l'une ou plusieurs des revendications 3 à 6, caractérisé en ce que la première partie (20) du levier (17) et le poinçon percuteur (29) sont pourvus de perçages alignés (32, 34) pour le gaz sous pression.

8. Dispositif selon l'une ou plusieurs des revendications 1 à 7, caractérisé en ce que la cartouche de gaz sous pression (13) reliée à la seconde partie (16) du levier (17) forme une poignée pour le levier (17).

9. Dispositif selon l'une ou plusieurs des revendications 1 à 8, caractérisé en ce qu'il comporte un dispositif à deux leviers (17) permettant d'ouvrir deux cartouches de gaz sous pression (13).

10. Dispositif selon la revendication 9, caractérisé en ce que les deux leviers (17) sont protégés contre un actionnement simultané grâce à un élément de verrouillage (37).

11. Dispositif selon la revendication 10, caractérisé en ce que l'élément de verrouillage (37) est réalisé sous forme d'une goupille pouvant être déplacée en va-et-vient entre deux éclisses (25) de l'un et de l'autre des leviers (17), placées en vis-à-vis l'une de l'autre, et aux extrémités de laquelle sont associées des encoches d'arrêt (38) ménagées dans les éclisses (25).

12. Dispositif selon la revendication 11, caractérisé en ce que, sous l'action d'un mouvement de basculement de l'un des leviers (17), une extrémité de l'élément de verrouillage (37) peut être forcée à sortir de l'encoche d'arrêt (38) de l'éclisse (25) associée à ce levier (17), alors que son autre extrémité est forcée à rentrer dans l'encoche d'arrêt (38) de l'éclisse (25) associée à l'autre levier (17).

13. Dispositif selon l'une ou plusieurs des revendications 1 à 12, caractérisé en ce que le dispositif est agencé dans la cabine de conduite (1) d'un véhicule et sert à alimenter en gaz sous pression provenant d'au moins une cartouche de gaz sous pression (13), et par l'intermédiaire d'une conduite (11) de gaz sous pression, un organe de commande (6) pour un support (5) d'un élément porteur (3) d'un dispositif antipatinage, monté sur le véhicule, de manière à amener ce dispositif d'une position de repos en une position de fonctionnement, des brins de chaînes (4) étant fixés sur l'élément porteur (3) pouvant être mis en rotation, leurs extrémités, qui sont éloignées de l'élément porteur (3), étant projetées au loin de l'élément porteur (3) jusque dans la zone de contact entre le sol et le pneu tournant (2) du véhicule, sous l'action de la force centrifuge produite lorsque l'élément porteur tourne en position de fonctionnement.
